# EUROPEAN PATENT SPECIFICATION

(11) **EP 2 886 238 B1**
(45) Date of publication and mention of the grant of the patent: **17.07.2019**
(21) Application number: 13829659.5
(22) Date of filing: 30.07.2013
(51) Int. Cl.: B23K 13/08, B21C 37/08, B23K 13/02, B23K 13/00

(54) **WELDING DEVICE FOR ELECTRIC RESISTANCE WELDED PIPE**
SCHWEISSVORRICHTUNG FÜR EIN WIDERSTANDSGESCHWEISSTES ROHR
DISPOSITIF DE SOUDAGE DESTINÉ À UN TUYAU SOUDÉ PAR RÉSISTANCE ÉLECTRIQUE

(30) Priority: 17.08.2012 JP 2012181054
(43) Date of publication of application: 24.06.2015
(73) Proprietor: Nippon Steel Corporation, Tokyo (JP)
(72) Inventor: HIROTA Yoshiaki, Tokyo 100-8071 (JP)
(74) Representative: Vossius & Partner Patentanwälte Rechtsanwälte mbB
(86) International application number: PCT/JP2013/070653
(87) International publication number: WO 2014/027565

(56) References cited:
- EP-A1- 2 478 989
- WO-A1-2011/034087
- JP-A- H0 788 662
- JP-A- H0 910 961
- JP-A- H05 285 673
- JP-A- H11 129 027
- JP-A- S61 140 385
- JP-A- S63 112 074
- JP-A- 2000 094 033
- JP-A- 2012 016 749
- US-A1- 2005 133 496
- US-A1- 2008 308 550
- US-A1- 2008 308 550

## Description

### Technical Field

The present invention relates to an electric resistance welded pipe manufacturing apparatus that induction heats a running metal strip being bent into a circular tube, and that welds the two end parts of the metal strip together using electric current induced in the metal strip.

### Background Art

Generally, methods to manufacture a metal pipe include manufacturing methods for electric resistance welded pipes and spiral tubes in which a pipe shape is formed by welding a metal strip while bending, and manufacturing methods for seamless tubes in which a hole is directly opened in a metal billet, and manufacturing methods in which a tube is formed by extrusion.

Electric resistance welded pipes have particularly high productivity are mass producible due to being producible at low lost. With such electric resistance welded pipes, an open pipe is formed in a circular tube shape from a running metal strip, and then a high frequency current is made to flow in end parts of the open pipe that face each other across an opening (also referred to below simply as "end parts of the open pipe") and, in a state of being heated to melting temperature, the two end faces of the two end parts of the open pipe are pressed together into a pipe shape using rolls and welded. When this is being performed, as a method to supply current to the end parts of the open pipe, one example of a method is, for example as described in Patent Document 1 and Non-Patent Document 1, to wind an induction coil (solenoid coil) so as to surround the outer circumference of an open pipe, and to directly generate an induction current in the open pipe by causing a primary current to flow in an induction coil, and another method is to press metal electrodes against the end parts of the open pipe, and to directly electrify using current from a power source. A high frequency current of from approximately 100 kHz to approximately 400 kHz is generally employed as the current passing through the induction coil or the electrodes at this time, and a ferromagnet known as an impeder is often placed at the inner face side of the pipe. The impeder is employed to prevent induction current that does not contribute to welding, due to attempting to circulate around the internal circumference of the open pipe.

### Related Documents

### Related Patent Documents

Patent Document 1: Japanese Patent Application Laid-Open (JP-A) No. S53-44449

### Related Non-Patent Documents

Non-Patent Document 1: "Fundamentals and Applications of High Frequency" (Published by Tokyo Denki University, pages 79, 80).

Patent Document 2: EP-A-2 478 989.

### SUMMARY OF INVENTION

### Technical Problem

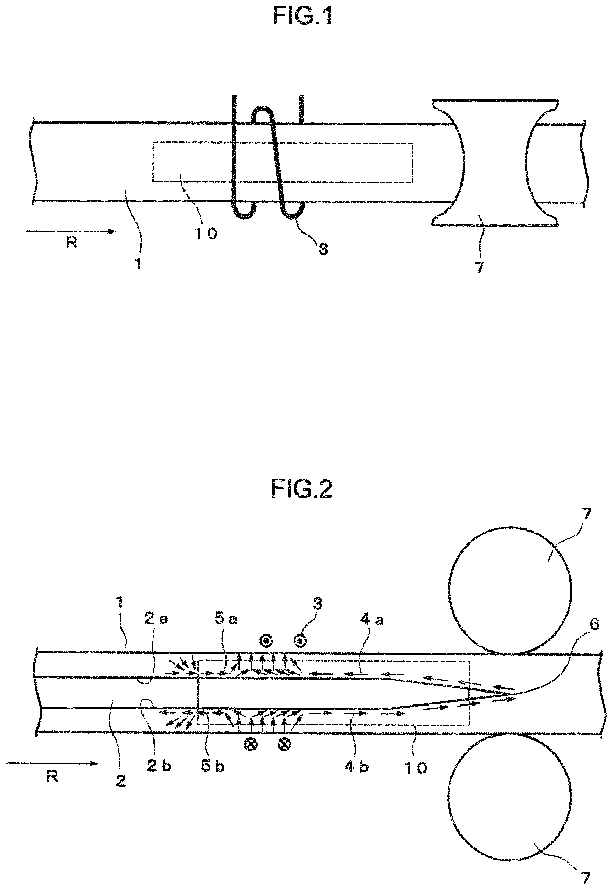

Fig. 1 and Fig. 2 are schematic diagrams to explain an electric resistance welded pipe welding process. Fig. 1 is a schematic side view to explain a process in which an electric resistance welded pipe is manufactured by winding an induction coil around the outer circumference of an open pipe, and using an induction current generated in the open pipe by a primary current flowing in the induction coil. Fig. 2 is a plan view schematically illustrating a distribution of an induction current. Most of the current flowing at the end faces (the two end parts) of the open pipe here flows in the mutually facing end faces; however, in order to simplify explanation, current in Fig. 2 is depicted as if flowing at the upper face side (outer face side) of end part of the open pipe for convenience. In the explanations of other figures below, the current flowing at the two end parts of the open pipe is also depicted as current flowing at the upper face side of the two end parts.

As illustrated in Fig. 1, a metal strip 1 that is the welding piece is worked from a flat plate state while running by bending with rolls, not illustrated in the drawings, and formed into the shape of a tube shaped open pipe 1 with two end parts 2a, 2b that face each other, and then the two end parts 2a, 2b are pressed together by squeeze rolls 7 and make contact at a join portion (weld portion) 6. An induction coil (solenoid coil) 3 like that illustrated in Fig. 1 is provided upstream of the squeeze rolls 7 in order to melt and join together the two facing end parts 2a, 2b, and an induction current is generated in the open pipe 1, bent into a tube shape, directly below the induction coil by high frequency current flowing in the induction coil 3. The induction current circulates at the outer circumference of the open pipe 1 along the induction coil 3 that encircles the open pipe 1. However, due to the two end parts 2a, 2b of the open pipe 1 being opened partway along by the opening, at this portion the induction current is not able to flow directly below the induction coil, and flows broadly in two directions. Namely, as illustrated in Fig. 2, firstly there is current 4a, 4b along the two end parts 2a, 2b of the open pipe 1 passing through the join portion 6, and secondly there is current flowing from the opening in the open pipe 1 around the circumferential face.

The current attempting to flow around the inner circumference of the open pipe 1 is omitted from illustration in Fig. 2. This is since, as illustrated in Fig. 1, what is referred to as an impeder 10, such as core made from a ferromagnetic material, such as ferrite or the like, is placed inside the open pipe 1 to raise the impedance at the inner face of the open pipe 1, and to enable induction current to be prevented from flowing at the inner circumference of the open pipe 1. Sometimes, in cases in which the diameter of the electric resistance welded pipe to be manufactured is large relative to the out-and-return length, to and from the join portion 6, and the length of the inner circumference of the open pipe 1 is sufficiently long, the impedance of the inner circumference is sufficiently large even without placement of the impeder 10, and current is suppressed from flowing around the inner circumference.

Normally, the power input to the induction coil 3 is mostly consumed by a portion that the induction coil circulates at the outer circumference of the open pipe 1, and by an out-and-retum portion, to and from the join portion 6. Thus the larger the diameter of the electric resistance welded pipe to be manufactured, the larger the outer circumference length of the open pipe 1 compared to the out-and-return distance from the induction coil 3, to and from the join portion 6, so the larger the proportion of power that heats the outer circumference of the open pipe 1 compared to the power that heats the end parts of the open pipe 1, with a fall in heating efficiency. Therefore, when conventionally manufacturing large diameter electric resistance welded pipes, sometimes contact conduction is performed by electrodes in which it is possible to suppress current from flowing around the outer circumference of the open pipe. Such contact conduction has the advantage of giving a high welding efficiency; however, there is an issue that flaws readily develop in the portions of the electrodes that contact the open pipe, and flaws readily develop as sparks occur, due to defective contact between the electrodes and the open pipe or the like. There is accordingly a need to employ a method that uses a non-contact induction coil in order to eliminate the development of such flaws. However, as described above, if such a method is applied to manufacturing large diameter electric resistance welded pipes, this results in the proportion of current that circulates the outer circumferential portion of the open pipe and heats the open pipe being large compared to the current that heats the end parts of the open pipe. There is accordingly a need to increase the power source capacity due to the lower welding efficiency, with issues arising such as increased facility cost, and burnout of the impeder due to being unable to withstand the strong magnetic field due to increased power. Such situations have conventionally meant that production must be performed while suppressing the power source capacity so that the impeder does not burnout, leading to a fall in productivity, or production must be performed at low heating efficiency when an impeder is not used.

Moreover, in cases in which a primary current flows in an induction coil 3 disposed so as to surround the outer circumferential face of the open pipe 1, magnetic flux generated by the induction coil 3 does not only induce current to flow in the open pipe 1 directly below the induction coil 3, but due to the spreading out of the magnetic flux, current is not only induced to flow in the open pipe 1, but also in rolls and the like in the vicinity of the induction coil 3. In such cases, the current flowing in the end parts of the open pipe 1 is reduced, giving rise to the issues of lower heating efficiency and deterioration in the production efficiency.

The present inventors have thoroughly investigated the distribution of induction current generated in the open pipe in order to increase the heating efficiency during electric resistance welding. Conventional explanation, such as that disclosed in Non-Patent Document 1, is that current only flows in the direction from directly below the induction coil towards the join portion. However, the present inventors have surveyed the current distribution using electromagnetic field analysis and testing of the electric resistance welded pipe, and found that actually, as illustrated in Fig. 2, not only does current from directly below the induction coil 3 flow as current in the direction of the join portion 6, but also a significant amount of current 5a, 5b branches off and flows upstream of the induction coil 3. Namely, it has been found that the power supplied to the induction coil 3 does not flow efficiently in the join portion, and is instead a cause of ineffective power (power loss).

In the case of Patent Document 2 a ferromagnet 9 is placed extending in the running direction inside an open pipe 1 but spaced from the area of the induction coil 3 surrounding the open pipe 1.

In consideration of the above circumstances, an object of the present invention is to provide an electric resistance welded pipe welding apparatus capable of suppressing the occurrence of current that is ineffective for welding, amplifying the current to the join portion, and capable of performing electric resistance welding with excellent efficiency using a simple apparatus.

### Solution to Problem

The present inventors, as a result of thorough investigation of the above issues to solve, have discovered that high heating efficiency is obtainable by using a ferromagnet with improved profile, placement position, and the like to control the flow of magnetic flux, even in cases in which electric resistance welded pipes are manufactured using a conventional induction coil formed by winding at least one turn or more around the outer circumferential face of the open pipe, and completing the present invention.

The solution to the problem is provided by the features in claim 1.

In the electric resistance welded pipe welding apparatus of the present invention, the ferromagnet preferably has a cross-section shape along the running direction of a C-shape or a square-cornered C-shape, a U-shape turned on its side or a square-cornered U-shape turned on its side, an h-shape turned on its side, or an H-shape turned on its side.

In the electric resistance welded pipe welding apparatus of the present invention, preferably at least one end portion on the downstream side among the outside section and the inside section of the ferromagnet is of a branched shape.

Moreover, in the electric resistance welded pipe welding apparatus of the present invention, preferably an impeder formed of a ferromagnetic material is disposed inside the open pipe, and the inside section of the ferromagnet is configured by at least a portion of the impeder.

### Advantageous Effects of Invention

According to the electric resistance welded pipe welding apparatus of the present invention, in comparison to conventional work coil methods that merely employ an impeder as a ferromagnetic core, it is possible to effectively raise heating efficiency during electric resistance welded pipe welding into a tube shape while bending a running metal strip, with a simple apparatus. Large capacity electrical equipment is not required, enabling the facility cost to be suppressed and enabling introduction at low cost even in cases in which an existing power source is employed.

Accompanying raising the heating efficiency as described above it would be possible to implement energy savings by lowering the amount of power employed, or, it would be possible to raise line speed if the same power was input, enabling improvement in productivity to be achieved. Moreover, even in cases in which an impeder is employed, lowering the intensity of magnetic field by lowering the power as described above enables the lifespan of the impeder to be extended. Moreover, there are immeasurable industrial advantageous effects due to it being possible to manufacture electric resistance welded pipes of sizes that were hitherto difficult to manufacture due to conventional limitations in power source capacity, and limitations due to burn out of impeders.

### BRIEF DESCRIPTION OF DRAWINGS

Fig. 1 is a schematic side view to explain the electric resistance welded pipe welding apparatus employing an induction coil formed from a closed circuit so as to surround the outer circumferential face of a metal strip bent into a circular pipe shape.
Fig. 2 is a schematic plan view illustrating a current distribution of an electric resistance welded pipe welding apparatus employing the induction coil explained in Fig. 1, based on conventional thinking.
Fig. 3 is a schematic plan view to explain an electric resistance welded pipe welding apparatus according to a first exemplary embodiment of the present invention.
Fig. 4 is a schematic side cross-section to explain an electric resistance welded pipe welding apparatus according to the first exemplary embodiment of the present invention, in a side cross-section in which the ferromagnet of Fig. 3 is placed so as to straddle an induction coil and the opening of an open pipe.
Fig. 5 is a schematic plan view to explain current distribution in cases in which the electric resistance welded pipe welding apparatus illustrated in Fig. 3 is employed.
Fig. 6 is a diagram illustrating an example in which a downstream side end portion of an outside section of a ferromagnet branches into two, in a schematic plan view to explain a modified example of an electric resistance welded pipe welding apparatus according to the first exemplary embodiment of the present invention.
Fig. 7 is a view illustrating an example of a support structure for the ferromagnets of Fig. 3, 4, 6 in a schematic sectional view to explain a modified example of an electric resistance welded pipe manufacturing apparatus according to the first exemplary embodiment of the present invention.
Fig. 8 is a diagram illustrating an example in which an impeder that also functions as an inside section of a ferromagnet is placed at the inner circumferential face side of a circular tube shaped open pipe, in a schematic side cross-section to explain an electric resistance welded pipe welding apparatus of another exemplary embodiment of the present invention.
Fig. 9 is a diagram illustrating an example in which a jutting out portion is provided at a downstream side end portion of an outside section of a ferromagnet, in a schematic side cross-section to explain a modified example of an electric resistance welded pipe welding apparatus according to the first exemplary embodiment of the present invention.
Fig. 10 is a diagram illustrating an example in which a lower portion of a center section makes direct contact with an impeder, in a schematic side cross-section illustrating a modified example of an electric resistance welded pipe welding apparatus according to the second exemplary embodiment of the present invention.
Fig. 11 is a diagram illustrating an example in which another ferromagnetic member is interposed between a lower portion of a center section and an impeder, in a schematic side cross-section illustrating a modified example of an electric resistance welded pipe welding apparatus according to the second exemplary embodiment of the present invention.
Fig. 12 is a schematic diagram illustrating an example in which an induction coil is a push-pull type in a schematic diagram to explain an electric resistance welded pipe manufacturing apparatus according to another exemplary embodiment of the present invention.
Fig. 13 is a schematic plan view of an open pipe formed with a model opening and employed in advantageous effect confirmation tests of the present invention.
Fig. 14 is a schematic side cross-section to explain an electric resistance welded pipe manufacturing apparatus of a Comparative Example 3.
Fig. 15 is a schematic plan view of an open pipe formed with a model opening and employed in advantageous effect confirmation tests of the present invention.
Fig. 16 is a schematic side cross-section illustrating an example of a C-shaped, or square-cornered C-shaped, ferromagnet applicable to an electric resistance welded pipe manufacturing apparatus of the present invention.
Fig. 17 is a schematic side cross-section illustrating an example of a sideways facing U-shaped, or a sideways facing square-cornered U-shaped, ferromagnet applicable to an electric resistance welded pipe manufacturing apparatus of the present invention.
Fig. 18 is a schematic side cross-section illustrating an example of an h-shaped turned on its side ferromagnet applicable to an electric resistance welded pipe manufacturing apparatus of the present invention.
Fig. 19 is a schematic side cross-section illustrating an example of an H-shaped turned on its side ferromagnet applicable to an electric resistance welded pipe manufacturing apparatus of the present invention.

### DESCRIPTION OF EMBODIMENTS

Explanation next follows regarding exemplary embodiments of an electric resistance welded pipe welding apparatus of the present invention, with reference to Fig. 1 to Fig. 12 as appropriate. The exemplary embodiments are for the purpose of detailed explanation to achieve a better understanding of the principles of the invention, and do not limit the present invention unless otherwise stated.

Generally a process to manufacture an electric resistance welded pipe employing a work coil is performed in the sequence set out below.

First, a tube shaped open pipe is formed by bending a running metal strip, slit to a width matching the diameter of the pipe to be made, with rolls such that the two width direction end parts of the metal strip face each other. Then, an induction current is caused to flow in the open pipe by an induction coil, and end parts of the open pipe are heated and melted. Then, in downstream processing, the two facing end parts of the open pipe are pressed into close contact by squeeze rolls and joined (welded) to obtain an electric resistance welded pipe. Reference here in the explanation of the present invention to "downstream" means downstream in the running direction of the metal strip or open pipe, and when reference is made below to "upstream" and "downstream" this means the "upstream" and "downstream" in the running direction of the metal strip or open pipe.

As described above when an electric resistance welded pipe is manufactured using an conventionally employed electric resistance welded pipe welding apparatus as illustrated in Fig. 1, a metal strip 1 is worked by bending with rolls into a tube shape, and induction heating is performed by an induction coil 3, disposed just ahead of final contact during pressing and contacting together using the squeeze rolls 7, and the two end parts 2a, 2b of the open pipe 1 are heated and melted, and pressed together by the squeeze rolls. Then when a primary current flows through the induction coil 3, an induction current is generated in the open pipe 1 with the distribution illustrated in Fig. 2, and induction current flows in the surface layer of the open pipe 1 due to using a high frequency current, of the order of about 100kHz, in electric resistance pipe welding.

Due to an opening 2 being present extending in the running direction R of the open pipe, most of the induction current generated directly below the induction coil 3 broadly flows as a current path flowing via the join portion 6 side, as a current path flowing upstream of the induction coil 3, or as a path that circulates around the inner circumference of the open pipe 1.

In the above, the current trying to circulate at the inner circumference of the open pipe 1 can be suppressed by placing the impeder 10 configured from a ferromagnetic material, such as ferrite, inside the open pipe 1, so as to raise the impedance at the inner face. The induction current that contributes to welding in Fig. 2 is currents 4a, 4b flowing at the join portion 6 side; however, due to a proximity effect from the high frequency current, the currents 4a, 4b also flow in the surface layer of two end parts 2a, 2b facing the opening 2 of the open pipe 1, and heat and melt these locations, which are then pressed together and welded at the join portion 6. For convenience, induction current is depicted in Fig. 2 using vectors flowing at an upper face in the vicinity of the two end parts 2a, 2b. However, when the primary current flows in the induction coil 3, magnetic flux is generated in the vicinity thereof, and the magnetic flux naturally surrounds the periphery of the induction coil 3, and eddy current is generated at locations where the magnetic flux passes through. In particular, due to the squeeze rolls 7 being disposed at the two sides of the join portion 6, and, while not illustrated in the drawings, rolls called top rolls being disposed above the join portion 6, the current flowing in the end parts 2a, 2b of the open pipe 1 decreases along with much of the generated magnetic flux heating each of the rolls, and there has been the problem of a drop in welding efficiency. In the present invention, such energy loss is reduced by suppressing the magnetic flux generated by the induction coil 3 from being directed toward locations that do not contribute to welding, realizing an electric resistance welded pipe welding apparatus capable of achieving high welding efficiency, and the configuration thereof is described in detail below.

### First Exemplary Embodiment

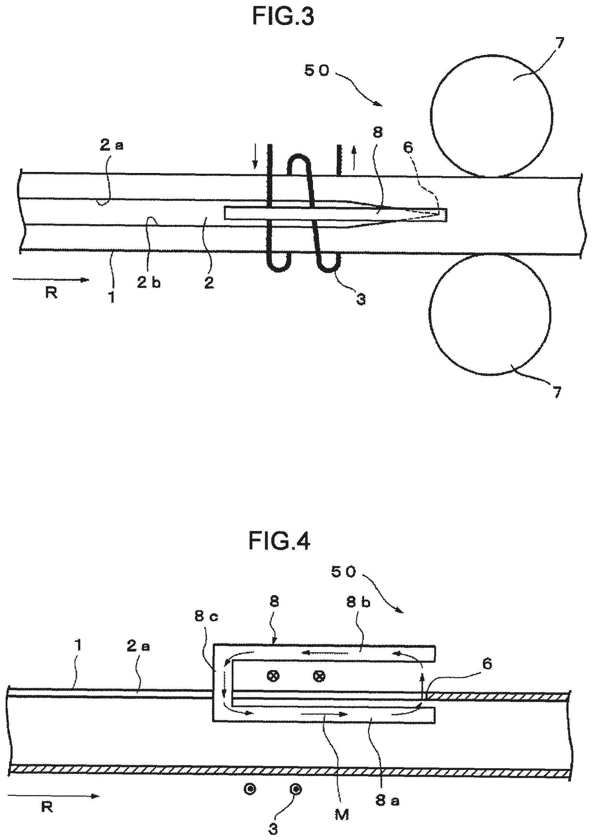

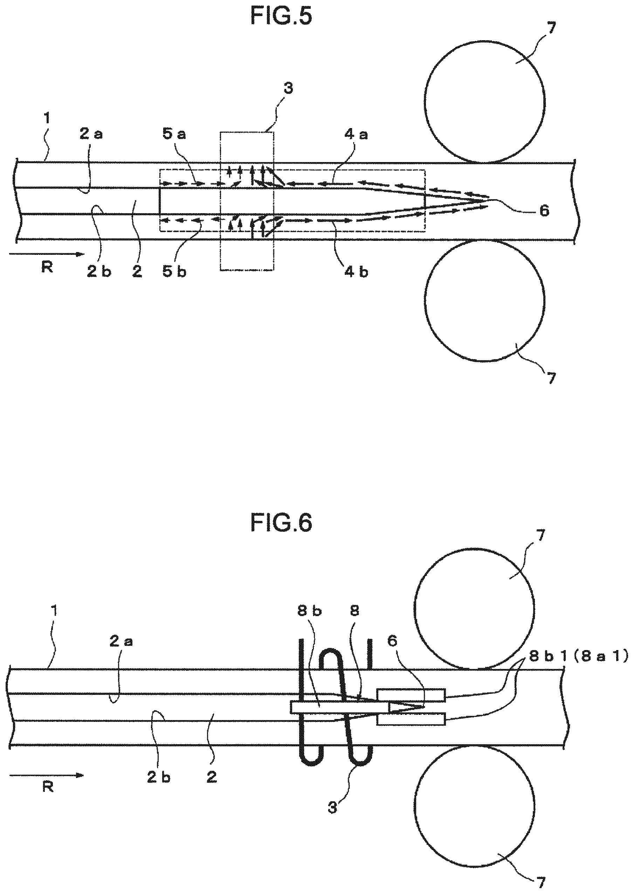

Fig. 3 is a schematic plan view illustrating an electric resistance welded pipe welding apparatus 50 that is a first exemplary embodiment of the present invention. Fig. 4 is a schematic side cross-section to explain the magnetic flux direction when performing electric resistance pipe welding using the electric resistance welded pipe welding apparatus 50 illustrated in Fig. 3, and when magnetic flux M generated by the induction coil 3 passes through a ferromagnet 8. Fig. 5 is a plan view schematically illustrating a distribution of induction current flowing in the open pipe 1 when performing electric resistance pipe welding using the electric resistance welded pipe welding apparatus 50 illustrated in Fig. 3 and Fig. 4.

In the electric resistance welded pipe welding apparatus 50 illustrated in Fig. 3, after the metal strip 1 running from upstream to downstream has been formed into the circular tube shaped open pipe 1 by bending using rolls, not illustrated in the drawings, such that the two end parts 2a, 2b in the width direction of the metal strip 1 face each other with a gap therebetween, a high frequency current is passed through the induction coil 3 formed to surround the outer circumferential face of the open pipe 1 such that the number of windings encircling the outer circumferential face is at least one turn or more, melting the two end parts 2a, 2b by the generated induction current. Namely, an apparatus that manufactures an electric resistance welded pipe by inducing a high frequency current with the induction coil 3, as an induction current in the vicinity of the opening 2 of the open pipe 1, heating and melting the two end parts 2a, 2b with the current, and making contact between and welding together the two end parts 2a, 2b as the gap of the opening 2 gradually narrows.

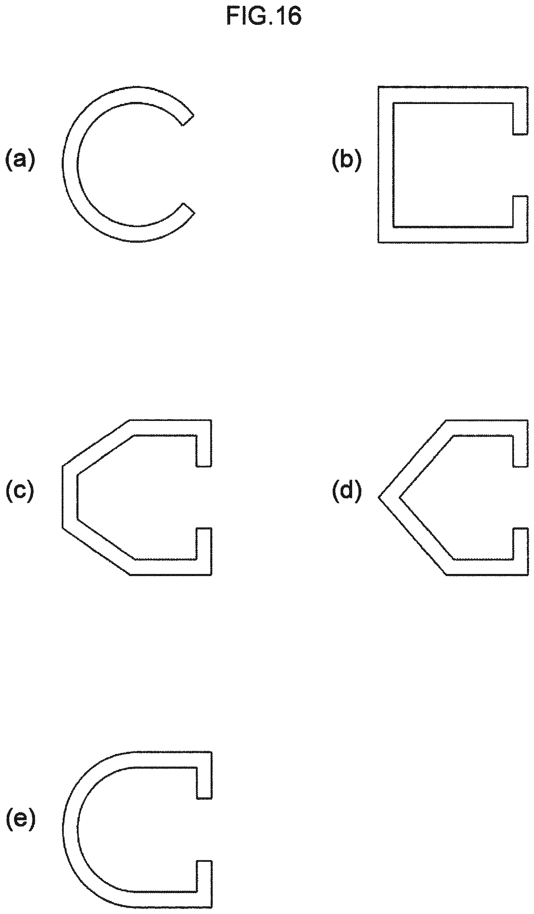

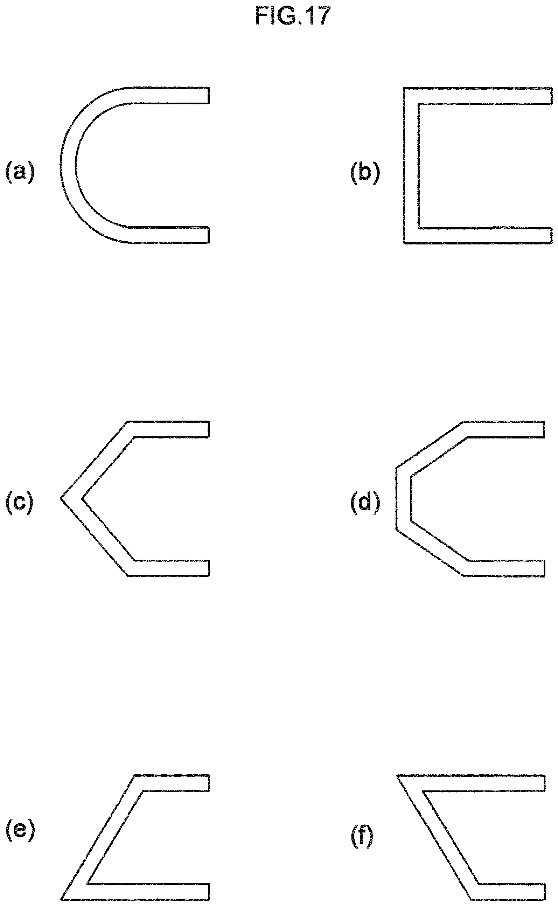

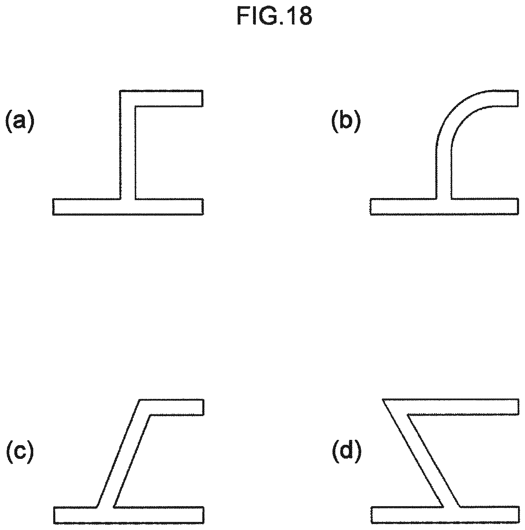

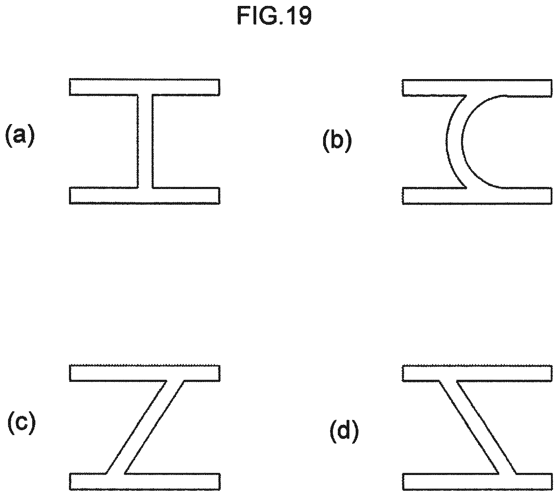

In the electric resistance welded pipe welding apparatus 50 of the present exemplary embodiment, the ferromagnet 8 is provided with a cross-section in the running direction of the open pipe 1 of a C-shape or a square-cornered C-shape, a U-shape turned on its side or a square-cornered U-shape turned on its side, an h-shape turned on its side, or an H-shape turned on its side (the square-cornered U-shape turned on its side is illustrated in the diagrams). The ferromagnet 8 is disposed such that the open portion (the open space) side thereof faces toward the downstream side in the running direction of the open pipe 1 and so as to straddle across the inside and outside of the open pipe 1. Moreover, the ferromagnet 8 is disposed so as to straddle the induction coil 3 that is formed encircling the open pipe 1, at a position at the pipe outside direction of the opening 2. Namely, the ferromagnet 8 includes an inside section 8a extending in the running direction R at the inside of the open pipe 1 and at the inside of the induction coil 3, an outside section 8b extending in the running direction R at the outside of the open pipe 1 and at the outside of the induction coil 3, and a center section 8c extending in the pipe inside-outside direction of the open pipe 1 between the inside section 8a and the outside section 8b at a position upstream of the induction coil 3, and is shaped such that at least one of the outside section 8b or the inside section 8a faces toward the join portion (weld portion) 6 further to the downstream side than the induction coil 3 in the running direction R of the open pipe 1. In the present specification a C-shape or a square-cornered C-shape includes at least the shapes illustrated in Figs. 16(a) to (e), a U-shape turned on its side or a square-cornered U-shape turned on its side includes at least the shapes illustrated in Fig. 17(a) to (f), an h-shape turned on its side includes at least the shapes illustrated in Fig. 18(a) to (d), and an H-shape turned on its side includes at least the shapes illustrated in Fig. 19(a) to (e).

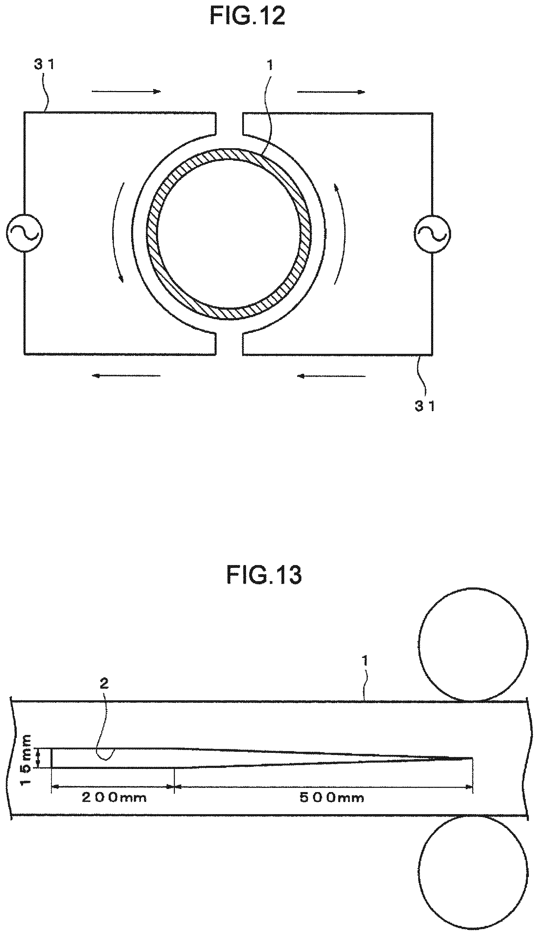

The induction coil 3 employed in the present invention is made from a pipe, wire, sheet, or the like of a good conductor, such as copper, and is used to refer collectively to induction coils that form closed circuits on the open pipe 1, and is not particularly limited to such materials. The induction coil 3, in the example illustrated in Fig. 3 and elsewhere, is formed in a shape so as to trace a circular shaped turn encircling the outer circumferential face of the open pipe 1; however, there is no limitation to such a shape, nor is there any particular limitation to the number of turns as long as there is at least one turn. Reference in the present invention to a number of windings of the induction coil of "one turn" also includes, for example, a combination of coils each of half a turn in the outer circumferential direction of the open pipe, the induction coil 31 of so-called push-pull type totaling substantially one turn, and the like (see Fig. 12).

As illustrated in the example of Fig. 3, the electric resistance welded pipe welding apparatus 50 of the present exemplary embodiment passes a primary current through the induction coil 3 (see the arrows in Fig. 3). When this occurs, as illustrated in Fig. 4, the magnetic flux M generated in the induction coil 3 at the vicinity of the opening 2 on the downstream side, without being directed toward the rolls 7 or the like, is selectively concentrated at the ferromagnet 8, which extends toward the join portion (weld portion) 6 side so as to straddle the induction coil 3 and which has a high magnetic permeability (low magnetic resistance), passes through the open pipe 1 at the vicinity of the two end parts 2a, 2b facing the opening 2, and generates an induction current. In reality the magnetic flux M is not only emitted from the two end portions of the ferromagnet 8, but a large amount is also emitted from partway along, forming a magnetic flux circuit that passes through space from the outside toward the inside of the open pipe 1 (from the inside section 8a that is at the bottom side in Fig. 4 toward the outside section 8b that is at the upper side thereof). However, for convenience of explanation, the magnetic flux M is depicted in the example illustrated in Fig. 4 so as to be emitted from the inside section 8a toward the outside section 8b at a single location (at the downstream side end portions of the inside section 8a and the outside section 8b).

The magnetic flux M that passes through the open pipe 1 forms a magnetic circuit in the ferromagnet 8, as indicated by the arrows in Fig. 4, connecting the pipe inside and outside, including between the inside section 8a disposed at the pipe inside of the open pipe 1 and the outside section 8b disposed at the pipe outside. This magnetic circuit is formed by the ferromagnet 8 of a C-shape or a square-cornered C-shape, a U-shape turned on its side or a square-cornered U-shape turned on its side, an h-shape turned on its side, or an H-shape turned on its side. However, in cases in which an impeder, described in detail below (see reference numeral 10 in Fig. 6), is disposed at the pipe inside, the inside section 8a at the pipe inside of the open pipe 1 may be configured by a portion of the impeder.

Since such a ferromagnet 8 has low magnetic resistance due to being made from a material with a high magnetic permeability, and effectively draws in the magnetic flux M emanating from the induction coil 3, the magnetic flux M can be made to pass through the two end parts 2a, 2b of the open pipe 1 at the join portion 6 side with good efficiency, enabling the induction current to be amplified in the vicinity of the join portion 6. The outside section 8b at the upper portion of the ferromagnet 8 is also able to capture magnetic flux M circulating in the vicinity, thereby reducing the magnetic flux M emitted toward the sides of the squeeze rolls 7 or the top rolls, not illustrated in the drawings, suppressing heat loss and enabling an improvement in heating efficiency in the two end parts 2a, 2b of the open pipe 1.

In the present exemplary embodiment, the primary current flows in the induction coil 3, and a distribution of induction currents 4a, 4b such as that illustrated by an arrow in Fig. 5 is created at the open pipe 1 by the magnetic flux M, described above. Namely, as illustrated in Fig. 3, the current flowing in the induction coil 3 flows from top to bottom at the left side of Fig. 3 connected to a power source, not illustrated in the drawings, and flows along the arrow directions illustrated in Fig. 3. Moreover, the current flowing in the induction coil 3 flows so as to encircle the periphery of the open pipe 1 while crossing over the inside of the opening 2 from the end part 2a side of the open pipe 1, then returns toward the top of Fig. 3, and back to the power source, not illustrated in the drawings.

When the primary current flows along the path described above in the induction coil 3, an induction current is generated that encircles the outer circumferential direction of the open pipe 1 in the opposite direction thereto. Therefore, as illustrated in Fig. 5, the induction current flows in the end face portions of the open pipe 1, and the end face portions of the open pipe 1 are heated by a main current, generated at the end part 2a side and the end part 2b side of the open pipe 1 by the induction currents 4a, 4b. At this time the impedance is lower as the width of the opening 2 of the open pipe 1 gets narrower at positions on the join portion 6 side, facilitating concentration of flowing current and high temperatures due to the proximity effect, melting and welding the two end parts 2a, 2b.

In conventional technology such as that illustrated in Fig. 1, a distribution of induction current is generated in the open pipe 1 such as that illustrated by the arrows in Fig. 2. The induction currents 4a, 4b flowing in the end faces of the open pipe 1 flow from reference numeral 4b, to the join portion 6, to the reference numeral 4a in Fig. 2, then the main induction current forms a loop at the vicinity of where the induction coil 3 is located, encircling the circular tube shaped open pipe 1 and flows to the reference numeral 4b side. The induction current 5a, 5b portions flow further to the upstream side than the induction coil 3, and form a loop encircling the circular tube shaped open pipe 1 at the upstream side. From out of the above induction currents, the current at the reference numerals 5a, 5b, and the current encircling the circular tube shaped open pipe 1 do not contribute to raising the temperature of the join portion 6, and hence a situation arises in conventional technology in which there is substantial wasted induction current.

In the present invention, as illustrated by the arrows in Fig. 4, the magnetic flux M generated by the induction coil 3, forms a magnetic circuit in the ferromagnet 8 that connects the pipe inside-outside, including between the inside section 8a disposed at the pipe inside of the open pipe 1, and the outside section 8b disposed at the pipe outside. The ferromagnet 8 effectively draws in the magnetic flux M emanating from the induction coil due to being formed from a material with high magnetic permeability, and the magnetic flux M can be made to pass through the two end parts 2a, 2b of the open pipe 1 in the vicinity of the join portion 6 with excellent efficiency, enabling induction current to be generated with excellent efficiency.

As a result, the induction currents 4a, 4b flowing in the end faces of the open pipe 1 in the present invention, originate at each point in the vicinity of the end faces, and spread out in the outer circumferential direction to form loops as many currents with extremely low current density. However, these induction currents do not form large loops, and form many loops in the vicinity of each origin point (the induction current loops are not illustrated in the drawings due to their low density and extremely large number). Thus in the present invention, the generation of a wasteful main current loop at portions far from the join portion 6, as occurs in cases employing conventional induction coils, is suppressed, and, as illustrated in Fig. 5, the current flowing to the upstream side of the end parts 2a, 2b of the open pipe 1 is reduced compared the conventional case illustrated in Fig. 2, amplifying the flow of current to the downstream side (join portion 6) side of the end parts 2a, 2b of the open pipe 1 by the equivalent amount, and enabling the end parts 2a, 2b of the open pipe 1 to be heated with excellent efficiency.

In the present exemplary embodiment, the placement position in the running direction R of the ferromagnet 8, with running direction R cross-section of a C-shape ora square-cornered C-shape, a U-shape or a square-cornered U-shape, an h-shape turned on its side, or an H-shape turned on its side, may be such that upstream side of the center section 8c of the ferromagnet 8 is further to the upstream side than the most upstream portion of the induction coil 3, and that the downstream side the end portion (open side) is further to the downstream side than the most downstream portion of the induction coil 3. In order to concentrate the magnetic flux M in the vicinity of the join portion 6, as illustrated in Fig. 3 and Fig. 4, the downstream side end portion (open side) preferably extends as far as the vicinity of the join portion 6, and in the running direction, the downstream side end portion (open side) of the ferromagnet 8 is preferably disposed so as to span from 30 mm to the upstream side of the join portion 6, to 30 mm to the downstream side of the join portion 6.

As the material of the ferromagnet 8, for example, ferromagnetic materials with a low electrical conductivity, such as ferrite, electromagnetic steel plate, and amorphous materials, may be employed, and may be designed such that magnetic flux saturation does not occur. In cases in which the magnetic flux density is high, and heat generation in the ferromagnet 8 cannot be ignored, a method may, for example, be adopted of supplying cooling water to cool the ferromagnet 8, or cooling with a gas, such as air, or a coolant of mixed gas and liquid.

The ferromagnet 8 is preferably shaped, as illustrated in Fig. 4, such that both the outside section 8b and the inside section 8a sandwiching the two end parts 2a, 2b of the open pipe 1 extend toward the join portion 6 side that is on the downstream side. However, for example, a heating efficiency raising effect is obtainable even if only one of the outside section 8b or the inside section 8a is shaped to extend toward the join portion 6 side.

Note that in the present exemplary embodiment, as illustrated in Fig. 6, preferably at least one of the two end portions disposed at the open side of the ferromagnet 8, namely downstream side end portions 8a1, 8b1 of the inside section 8a and the outside section 8b, is formed branched into a V-shape or U-shape so as to avoid the join portion 6 as viewed in plan view. Namely, at least one of the downstream side end portions 8al, 8b1 of the inside section 8a and the outside section 8b of the ferromagnet 8 are formed in a shape in plan view that divides so as to extend toward the two width direction outsides of the join portion 6 at a position in the vicinity of the end parts 2a, 2b of the open pipe 1. In the example illustrated in Fig. 6, only the downstream side end portion 8b1 of the outside section 8b is branched into two; however, preferably both the downstream side end portions 8al, 8b1 of the inside section 8a and the outside section 8b are shaped as described above.

As in the example illustrated in Fig. 4, the inside section 8a and outside section 8b of the ferromagnet 8 extends in a straight line to the vicinity of the join portion 6; however, at the vicinity of the join portion 6, molten metal is discharged by the electromotive force as the induction current is generated, and falls inside the pipe or is discharged toward the pipe surface, with a concern that the inside section 8a and the outside section 8b of the ferromagnet 8, in particular, might by damaged by molten metal that flies off rather than falling in this manner. To address this, the falling of molten metal onto the inside section 8a of the ferromagnet 8, and buildup and adhering of weld metal to the outside section 8b can be suppressed from occurring by branching the downstream side end portions 8al, 8b1 of the inside section 8a and the outside section 8b as illustrated in Fig. 6, thereby enabling a drop in the magnetic properties of the ferromagnet 8, caused by in temperature rise due to buildup of molten matter, to be prevented, and enabling stable performance to be maintained continuously. In particular, the downstream side end portion 8b1 of the outside section 8b of the ferromagnet 8 is branched so as to avoid the join portion 6, enabling constant monitoring of the state of the join portion 6 to be performed from above with a monitoring device of the like.

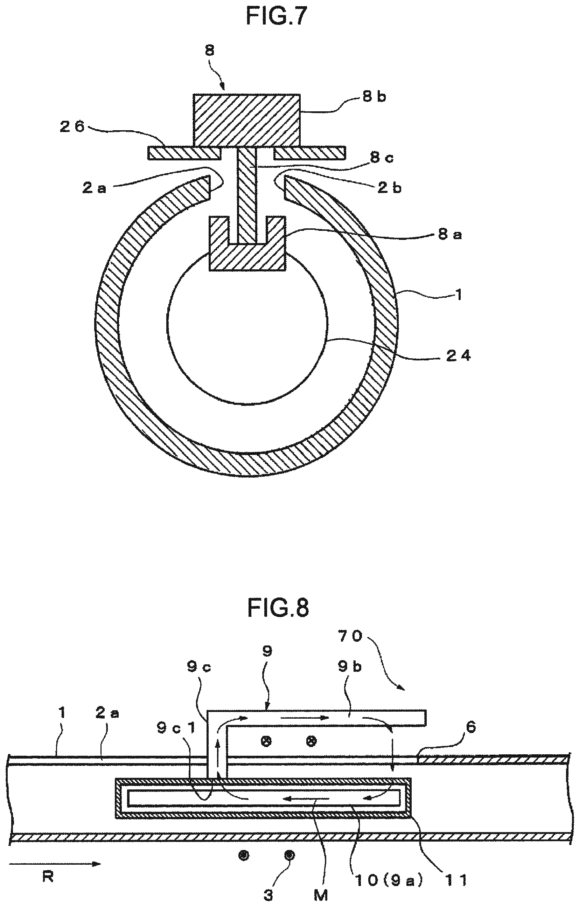

Next, Fig. 7 illustrates an example of a support structure for the ferromagnet 8 configured as described above. In the example illustrated, the outside section 8b and the center section 8c of the ferromagnet 8 are either formed as a single body, or fixed to each other, and the inside section 8a is formed as a separate body thereto. During assembly of the ferromagnet 8, first the inside section 8a of the ferromagnet 8 is attached to a mandrel 24 placed in the vicinity of the pipe inside center. Then, after the induction coil 3 has been set with a turn shape so as to surround the outer circumferential face of the open pipe 1 (see Fig. 3), the outside section 8b is mounted onto a stand 26 disposed above the opening 2. A state is thereby achieved in which the ferromagnet 8 is movably supported by suspension. At this stage, a lower end of the center section 8c fixed to the outside section 8b makes contact with an indented portion inner face formed at the upper face of the inside section 8a. Since the ferromagnet 8 is movable, adopting such a configuration enables damage to the ferromagnet 8, and large flaws on the end parts 2a, 2b of the open pipe 1 to be prevented from occurring even if a portion of the ferromagnet 8 makes contact with the end parts 2a, 2b of the open pipe 1 due to, for example, a position of the opening 2 of the open pipe 1 being displaced after bending processing. Moreover, in the ferromagnet 8, the center section 8c, for example, that is a location having a possibility of making contact with the end parts 2a, 2b of the open pipe 1 is preferably protected by an insulating material, such as glass tape or baking plate, from the viewpoints of enabling damage to the apparatus to be prevented, and enabling sparks to be prevented from occurring.

In the present invention, the magnetic flux M, which is generated at the induction coil 3 in the vicinity of the opening 2 by providing the ferromagnet 8 configured as described above, selectively passes through the ferromagnet 8 and through the two end parts 2a, 2b of the open pipe 1, and generates an induction current. The ferromagnet 8 also draws in the magnetic flux M emanating from the induction coil 3, enabling the magnetic flux M to efficiently pass through at the two end parts 2a, 2b on the join portion 6 side, and enabling amplification of the induction current in the join portion 6 vicinity. The magnetic flux M circulating in the vicinity of the ferromagnet 8 can be captured by the ferromagnet 8, further raising the current density of the induction current effective for welding in the vicinity of the join portion 6. Moreover, the magnetic flux M emitted toward the sides of the squeeze rolls 7 and top rolls is reduced, and the heating loss occurring at the upstream side of the open pipe 1 due to current flow that is ineffective for welding is suppressed, enabling the heating efficiency at the two end parts 2a, 2b to be raised.

A smaller power supply is accordingly sufficient compared to cases in which the ferromagnet 8 is not provided, and saving in energy is possible compared to cases in which the ferromagnet 8 is not provided. Conversely, inputting the same power is input as for a case in which the ferromagnet 8 is not provided, enables the line speed to be raised, and enables productivity to be improved.

### Second Exemplary Embodiment

Explanation follows regarding an electric resistance welded pipe welding apparatus according to a second exemplary embodiment of the present invention.

Fig. 8 is a schematic side cross-section illustrating an electric resistance welded pipe welding apparatus 70 according to the second exemplary embodiment of the present invention, and schematically illustrates a distribution of magnetic flux generated during electric resistance pipe welding.

In the present exemplary embodiment, in contrast to in the first exemplary embodiment described above, a configuration is adopted, such as the example described below, in order to further amplify the current to the join portion, and to increase the heating efficiency. In the present exemplary embodiment, the same reference numerals are appended to configuration similar to that of the first exemplary embodiment, and further detailed explanation is omitted thereof.

As illustrated in Fig. 8, the electric resistance welded pipe welding apparatus 70 of the present exemplary embodiment is similar to the first exemplary embodiment, except in that, in contrast to the electric resistance welded pipe welding apparatus 50 described above, the electric resistance welded pipe welding apparatus 70 includes an impeder 10 formed from a ferromagnetic material and placed at the pipe inside of the circular tube shaped open pipe 1, and at least one portion of the impeder 10 is employed in place of an inside section 9a of a ferromagnet 9 configured with an inside section 9a, an outside section 9b, and a center section 9c. The outside section 9b and the center section 9c of the ferromagnet 9 may employ similar materials to those of the ferromagnet 8 in the first exemplary embodiment.

More specifically, the ferromagnet 9 of the present exemplary embodiment is placed inside the open pipe 1, the impeder 10 also functions as the inside section 9c, and the ferromagnet 9 includes the outside section 9b extending in the running direction R at the outside of the open pipe 1 and the outside of the induction coil 3, and the center section 9c extending in the pipe inside-outside direction of the open pipe 1 between the impeder 10 and the outside section 9a at a position to the upstream side of the induction coil 3. The ferromagnet 9 is disposed such that the open side of the portion configured by the portions of the outside section 9b and the impeder 10 further to the downstream side than the center section 9c, and the center section 9c, faces toward the downstream side in the running direction R. The lower portion 9cl of the center section 9c of the ferromagnet 9 is supported at the outer peripheral face of an impeder case 11 covering the impeder 10.

Similarly to the outside section 9b and the center section 9c of the ferromagnet 9, for example, ferromagnetic materials with a low electrical conductivity, such as ferrite, electromagnetic steel plate, and amorphous materials, may also be employed as the impeder 10 in the present exemplary embodiment. Moreover, as stated above, in the example illustrated in Fig. 8, the impeder 10 is configured so as to be covered by the impeder case 11, and the lower portion 9c1 of the center section 9c of the ferromagnet 9 is supported at the outer peripheral face of the impeder case 11. There are no particular limitations to the substance of the impeder case 11 and, for example, it may employ a resin material, such as an epoxy. Placing the impeder 10 in the tube shaped open pipe 1 in this manner enables a magnetic circuit of magnetic flux M to be formed in cooperation with the outside section 9b and the center section 9c of the ferromagnet 9.

Placing the impeder 10 in the tube shaped open pipe 1 as in the present exemplary embodiment raises the impedance of the inner face of the open pipe 1, enabling induction current to be suppressed from flowing to the inner circumferential side of the open pipe 1 from the two end parts 2a, 2b of the open pipe 1.

Moreover, in the present exemplary embodiment, adopting a configuration as described above combining the outside section 9b and center section 9c of the ferromagnet 9 with the impeder 10 also enables the current density of the currents 4a, 4b flowing in the two end parts 2a, 2b to be raised by the ferromagnet 9, while suppressing the current from flowing from the two end parts 2a, 2b of the open pipe 1 toward the inner circumference side of the open pipe 1 with the impeder 10. When combining the outside section 9b and the center section 9c of the ferromagnet 9 with the impeder 10, extending outside section 9b and the center section 9c of the ferromagnet 9, that are placed so as to make contact with the top of the impeder case 11, to above the impeder 10 on the upstream side, enables the induction currents 5a, 5b that are ineffective for welding to be effectively suppressed from flowing toward the upstream side of the induction coil 3, as illustrated in Fig. 2, enabling the heating efficiency to be raised further.

Note that for the outside section 9b and the center section 9c of the ferromagnet 9 and the impeder 10 as described above, similarly to the ferromagnet 8 in the first exemplary embodiment, a configuration may be adopted in which cooling water is supplied, or cooling is supplied by a gas, such as air, or a coolant of mixed gas and liquid.

In the present exemplary embodiment, while suppressing induction current ineffective for welding, such as induction current flowing in the inner circumference of the open pipe 1 and flowing to the upstream side of the induction coil 3, by adopting a configuration combining the outside section 9b and the center section 9c of the ferromagnet 9 with the impeder 10, the current density is raised for the currents 4a, 4b that are effective for welding, such that induction current is concentrated and flows at the join portion 6 side. Thus as explained for the first exemplary embodiment, significant advantageous effects are obtained of reducing supplied power and enabling savings in energy, or, enabling productivity to be raised by raising the line speed if the same power is input.

As explained above, according to the electric resistance welded pipe welding apparatus according to the present invention, due to adopting the configuration including the ferromagnets 8, 9 configured as described above, the heating efficiency during electric resistance welded pipe welding while bending the running metal strip 1 into a tube shape can be effectively raised with a simple apparatus, compared to conventional work coil methods in which an impeder is merely placed inside an open pipe, facilitating set up. There is no requirement for large capacity electricity equipment and it is also possible to suppress facility cost, while also enabling introduction at a lower cost even in cases in which an existing power source is employed.

Accompanying such increases in heating efficiency, energy savings are implementable by reducing the amount of power employed, or it is possible to increase line speed when the same power is input, thereby enabling productivity to be improved. Moreover, even when an impeder is employed, the intensity of the magnetic field is lowered due to lowering the power as described above, enabling the lifespan of the impeder to be extended. Moreover, there are immeasurable industrial advantageous effects due to it being possible to manufacture electric resistance welded pipes of sizes that were hitherto difficult to manufacture due to limitations in power source capacity, and limitations due to burn out of impeders.

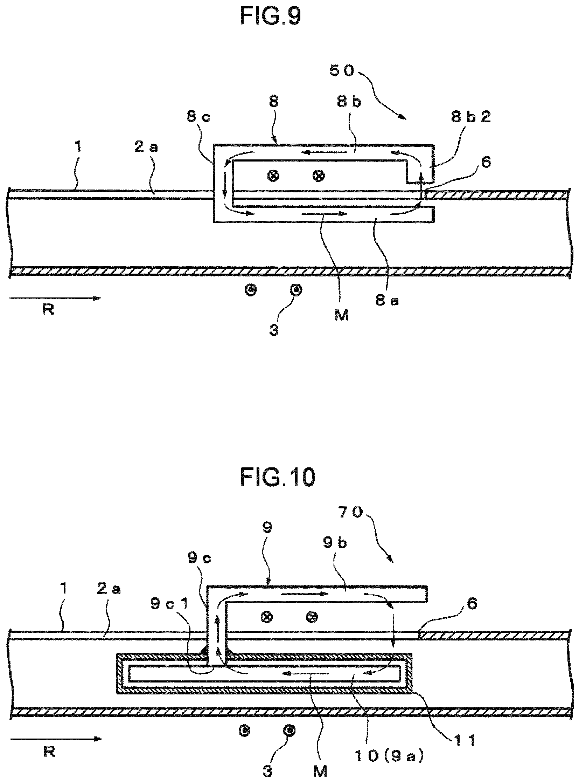

In the first and second exemplary embodiments, explanation has been given of an example in which the inside section 8a, 9a and the outside section 9a, 9b of the ferromagnets 8, 9 are disposed at a constant distance at the inside/outside of the open pipe 1; however, there is no requirement in the present invention for there to be a fixed distance between the open pipe 1 and the inside section 8a, 9a, and between the open pipe 1 and the outside section 9a, 9b, of the ferromagnet 8, 9. At least one of the inside section 8a, 9a and the outside section 9a, 9b of the ferromagnet 8, 9 may be placed so as to slope such that the distance between the inside section 8a, 9a and the outside section 9a, 9b gradually increases or gradually decreases on progression downstream (not illustrated in the drawings). Note that from the viewpoint of forming a favorable magnetic circuit, namely reducing magnetic resistance, the distance between the inside section 8a, 9a and the outside section 9a, 9b preferably gradually decreases on progression downstream. Moreover, from the same viewpoint, as illustrated in Fig. 9, a jutting out portion 8b2 may be provided to a downstream side end portion of the outside section 8b so as to project toward the inside section 8a. Alternatively, although not illustrated in the drawings, a configuration may be adopted in which the outside section of the ferromagnet has a stepped shape, and approaches the open pipe 1 at a position further to the downstream side than the induction coil 3.

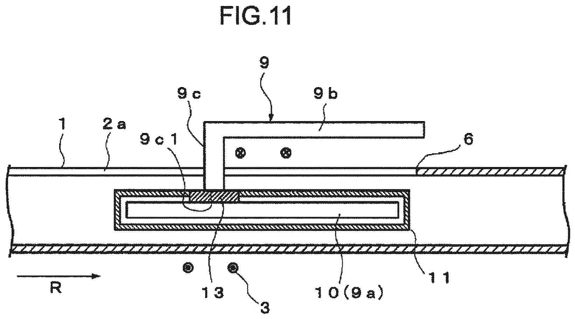

Although in the second exemplary embodiment explanation has been given of a case in which the center section 9c of the ferromagnet 9 is placed so as to make contact with the top of the impeder case 11, from the viewpoint of reducing magnetic resistance, configuration may be made such that the center section 9c of the ferromagnet 9 passes through the impeder case 11 and makes direct contact with the impeder 10 inside the impeder case 11 as illustrated in Fig. 10, with the portion of the impeder case 11 where the center section 9c of the ferromagnet 9 passes through sealed. From the same viewpoint, as illustrated in Fig. 11, configuration may be made such that another ferromagnet 13 is provided on the impeder 10 so as to pass through the impeder case 11, and the lower portion 9c1 of the center section 9c of the ferromagnet 9 is placed in contact with the ferromagnet 13.

In the present invention, as described above, it is possible to manufacture electric resistance welded pipes from small diameter to large diameter with the electric resistance welded pipe welding apparatus of simple structure, and it is particularly effective for production of large diameter electric resistance welded pipes, for which heating efficiency is decreased during production, with excellent efficiency.

### Examples

Explanation follows regarding example of electric resistance welded pipe welding apparatuses according to the present invention, and more specific explanation of the present invention is given. However the present invention is not limited to the following examples, and it is possible to implement additional appropriate modifications within a range to obtain the gist of the invention, as described above/below, and these are included in the technical range of the present invention.

In the examples, the advantageous effect of the present invention has been confirmed by static heating tests.

### Example 1

### Heated Member

In the present example, an opening shape was modeled as illustrated in Fig. 13, using laser cutting, to an upper portion of a carbon steel pipe for ordinary piping (SGP pipe) according to JIS standard, with an external diameter of 38.1 mm, wall thickness of 3 mm, and length of 1m (referred to below as open pipe), and was employed as a heated member. During laser cutting, an opening was opened with a gap at a parallel opening portion: 15 mm, and a length: 200 mm from the left end portion in Fig. 13, followed by opening along a length of 500 mm, with an apex angle: 4° between the apex modelling the join portion and the two end parts. The apex had a radius of 0.5 mm.

### Electric Resistance Welded Pipe Welding Apparatus

In the electric resistance welded pipe welding apparatus employed in the present example, as illustrated in Fig. 3, and Fig. 4, a 10 mm diameter water cooled copper pipe was employed as an induction coil with a gap to the open pipe of 10 mm, wound onto the outer circumferential face side of the open pipe to give a length in the running direction of 50 mm while making two turns around the outside circumferential face side of the open pipe, with a coil internal diameter of 80 mm. Power was input during heating with a frequency of 200 kHz at 50 kW, and at constant power, the time until a maximum temperature of 1000°C was achieved was recorded. The heating temperature was measured by welding 50 µm type K thermocouples at a pitch of 20 mm from the apex (join portion) onto the end parts facing the opening of the open pipe. In the present example, in tests employing an impeder, a ferrite core of length 400 mm and internal diameter 16 mm was inserted into the impeder case 11 made from epoxy resin with an external diameter of 25 mm as illustrated in Fig. 8. Moreover, testing was performed with a water cooled impeder provided with water supply-discharge ports to enable water cooling placed inside the pipe.

### Test Procedure

First, as Invention Example 1, heating was performed with the above induction coil disposed with one end portion of the induction coil placed at a position 150 mm away from the apex. When doing so, a ferrite core was disposed as the ferromagnet 8, as illustrated in Fig. 3, so as to straddle the induction coil and the opening 2. More specifically, the ferrite core serving as the ferromagnet 8 was configured with thickness: 20 mm, width: 15 mm for the outside section and the inside section, which extend to the apex from a position 280 mm away from the apex, and height: 50 mm, and width: 5 mm for the center section. Then, after disposing the ferrite core so as to be disposed as illustrated in Fig. 3, heating was performed. Although actual steel pipe formation was not employed, in order to observe the influence of magnetic flux generated by the induction coil with consideration of the configuration of an actual electric resistance welded pipe welding apparatus, heating was performed in a state in which steel tubes of 100 mm diameter modeling the squeeze rolls 7, illustrated in Fig. 3 and elsewhere, were placed so as to make contact at the two sides of the apex.

As Invention Example 2, the above induction coil was disposed similarly to in the Invention Example 1 and, as illustrated in Fig. 8, the above water cooled impeder was disposed as the impeder 10 over a range from directly below the apex to 400 mm toward the upstream side. As other elements configuring the ferromagnet 9, a ferrite core was employed including the outside section 9b of thickness 20 mm, width: 15 mm, extending to the apex from a position 280 mm away from the apex, and the center section 9c with a length in the pipe inside-outside direction: 50 mm, and a width of 5 mm, with the lower portion 9c1 of the center section 9c in a supported state by the impeder case 11. In the present example, similarly to in the Invention Example 1, heating was performed with steel tubes of 100 mm diameter modeling the squeeze rolls 7 disposed on the two sides of the apex, and in a state of contact at the two sides of the apex.

As a Comparative Example 1, heating was performed similarly to in the Invention Example 1 except in the point that there was no ferrite core placed as the ferromagnet 8.

As a Comparative Example 2, heating was performed similarly to in the Comparative Example 1, except in the point that the impeder 10 similar to that of the Invention Example 2 was placed in the circular tube shaped open pipe 1.

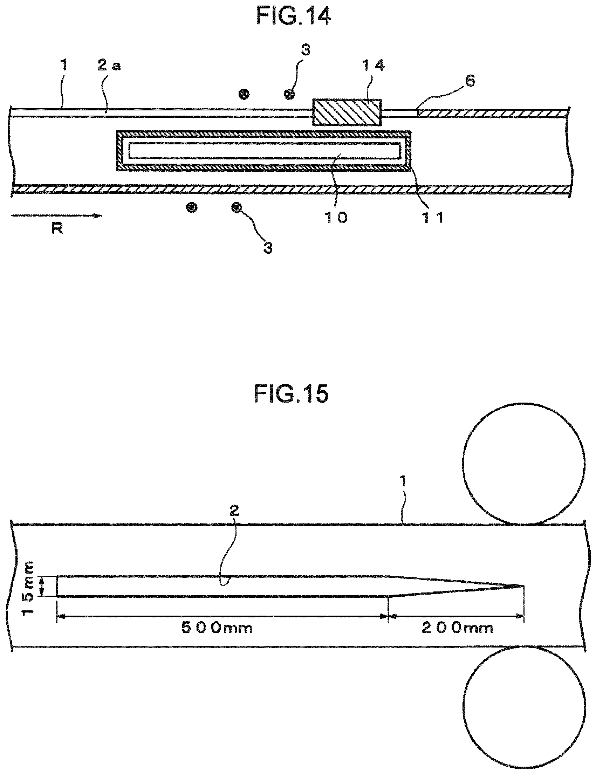

As a Comparative Example 3, in addition to the state of Comparative Example 2, as illustrated in Fig. 14, a rectangular parallelepiped of ferrite core 14, with width 5 mm (in the direction between the two end parts of the open pipe), thickness 10 mm (height direction), and length 40 mm (running direction R), was placed in an opening between the induction coil and the apex, so as to be positioned between the two end parts of the open pipe, at a position facing toward the two end parts of the open pipe from the induction coil downstream end to 10 mm downstream thereof.

In each of the above tests, in consideration of the movement of the open pipe in an actual electric resistance welded pipe welding apparatus, when heating had been performed for a duration of 10 seconds, the temperature detected by each thermocouple welded in sequence along the length direction to the two end faces of the open pipe were integrated, and a relative evaluation (heat generation amount ratio) was performed with the heat generation amount by the test (Comparative Example 2) installed with only the known induction coil and the impeder 10 being taken as 1.

The results of the Invention Examples 1, 2, and the Comparative Examples 1 to 3 are shown in the following Table 1.

**Table 1**

| Type | | Total Heat Generation Amount Ratio at Join Portion (-) |
|---|---|---|
| Invention Examples | Invention Example 1 | 1.4 |
| | Invention Example 2 | 1.7 |
| Comparative Examples | Comparative Example 1 | 0.4 |
| | Comparative Example 2 | 1.0 |
| | Comparative Example 3 | 0.2 |

As illustrated in Table 1, due to heating in the Comparative Example 1 being performed without installing either the ferromagnet or the impeder, and with only the induction coil installed, the two end faces of the open pipe were only heated at the end faces directly below the induction coil, and there was only a slight current flowing in the direction toward the weld portion (apex) due to current circulating the inner circumference of the open pipe.

Moreover, in the Comparative Examples 1, 2, due to heat generation observed in the steel tubes simulating the squeeze rolls 7 disposed in the vicinity of the apex, it is thought that magnetic flux generated by the induction coil was emanating and flowing in the steel tubes simulating the squeeze rolls 7, with induction current generated in these steel tubes that did not contribute to welding.

In Comparative Example 3, heat generation is suppressed compared to cases in which the ferrite core 14 is not installed. This is thought to be due to the ferrite core 14, having a similar effect to an impeder, being installed in the opening where current is flowing, suppressing induction current from flowing in the end faces, and reducing the induction current flowing to the apex.

In contrast thereto, the heat generation amount ratio was 1.4 relative to the Comparative Example 2 in the Invention Example 1 in which heating was performed with ferrite placed as the ferromagnet 8 with square-cornered U-shape side cross-section so as to straddle the induction coil and the opening 2 of the open pipe 1, and it is clear that the heat generation amount was even greater. In the Invention Example 1, in particular, it has been confirmed from the fast heating speed in the vicinity of the apex that the advantageous effects of an impeder are also exhibited by a ferrite core section (the inside section 8a) placed inside the open pipe (steel pipe), even without placement of the impeder.

Moreover, in the heated Invention Example 2 in which the water cooled impeder as the impeder 10 at the pipe inside of the open pipe 1, and the outside section 9b and the center section 9c as the ferrite cores, are installed as the ferromagnet 8, the heat generation amount ratio was 1.7 times relative to the Comparative Example 2, confirming that the heat generation amount was further increased even with respect to the Invention Example 1. This is thought to be an effect of the water cooled impeder reliably suppressing current flowing to the upstream side of the induction coil, circulating around the inner circumferential face, and confirms that a greater effect can be obtained by combination with a ferrite core installed at the outer face side.

Moreover, in the Invention Examples 1, 2, there was no rise in temperature seen on the opening side of the steel tubes simulating the squeeze rolls 7. This is thought to be because, in particular, magnetic flux generated by current flow in the induction coil, and emanating into the surroundings, is captured by the ferrite core serving as the outside section 8b, 9b provided to the ferromagnet 8, 9, thus suppressing magnetic flux from flowing in the steel tubes simulating the squeeze rolls 7, and suppressing induction current from being generated in the steel tubes.

Moreover, in the Invention Examples 1, 2, it is thought that reason that a higher heat generation amount ratio is obtainable than in the Comparative Examples 1, 2 of the conventional electric resistance welded pipe welding apparatus configurations is also the fact that the magnetic flux generated by passing the primary current in the induction coil is effectively captured by the ferromagnet 8, 9, suppressing induction current from flowing at the upstream side of the open pipe 1.

It has been confirmed by the results of the above Invention Examples, in which the present invention is configured with a ferromagnet placed so as to straddle the induction coil and the opening 2 of the open pipe 1, that there is a large improvement in heating efficiency due to performing electric resistance welding employing the electric resistance welded pipe welding apparatus of the present invention.

### Example 2

In the present example, an opening shape was modeled as illustrated in Fig. 15, using laser cutting, to an upper portion of a SGP pipe with an external diameter: 38.1 mm, wall thickness: 3 mm, and length: 1m, and was employed as a heated member. During laser cutting, an opening was opened with a gap at a parallel opening portion: 15 mm, and length: 500 mm from the left end portion in Fig. 15, followed by an opening of 200 mm length with an angle of 5° between the apex modelling the join portion and the two end parts. The apex had a radius of 0.5 mm.

In the present examples, similarly to in Example 1, a 10 mm diameter water cooled copper pipe was employed as an induction coil with a gap from the steel tube (metal strip) of 10 mm, wound onto the outer circumferential face side of the open pipe to give a length in the running direction: 50 mm while making two turns. The heating was performed with the induction coil disposed with one end portion of the induction coil at a position 150 mm away from the apex.

Similarly to in the case of Example 1, power was input during heating with a frequency of 200 kHz at 20 kW, and the time until a maximum temperature of 1000°C was achieved was recorded. The heating temperature was measured by welding 50 µm type K thermocouples at a pitch of 20 mm from the apex onto the open pipe end parts.

As the impeder 10, a ferrite core of length 400 mm, thickness 8 mm, was inserted into the impeder case 11 made from epoxy resin with an external diameter of 25 mm. A water cooled impeder provided with water supply-discharge ports to enable water cooling was disposed over a range from directly below the apex to 400 mm toward the upstream side.

Similarly to in Example 1, in the present example also, heating was performed in a state in which steel tubes of 100 mm diameter, modeling the squeeze rolls 7 illustrated in Fig. 3, were placed so as to make contact at the two sides of the apex in order to observe the influence of magnetic flux generated by the induction coil.

In the present example, as the outside section 9b of the ferromagnet 9, a ferrite core of upstream-downstream direction length: 350 mm, width: 10 mm, was installed above the induction coil, with a gap from the open pipe 1 of 30 mm, and a gap from the induction coil of 10 mm.

In addition to the above, a ferrite core serving as the center section 9c, of running direction length: 40 mm, width: 5 mm, was disposed in Invention Example 3 and heated.

As an Invention Example 4, heating was performed similarly to in the Invention Example 3, except in the point that the running direction length of the ferrite core employed as the center section 9c was 120 mm.

Note that in the Invention Examples 3, 4, the heating was performed for a configuration with placement with a gap of 5 mm between a ferrite core serving as the center section 9c and the two end parts of the open pipe 1, using the above water cooled impeder as part of the ferromagnet 9 (the inside section 9a).

As a Comparative Example 4, heating was performed similarly to in the Invention Examples 3, and 4, except in the point that a ferrite core was installed as the center section 9c.

As a Comparative Example 5, heating was performed similarly to in the Invention Examples 3 to 5, except in the points that heating was performed under conditions of only being installed with the water cooled impeder, and not being installed with the ferrite core as the outside section 9b above the induction coil, or the ferrite core as the center section 9c, and the total amounts of heat were compared.

The results of Invention Examples 3, 4 and Comparative Examples 4, 5 are shown in the following Table 2.

**Table 2**

| Type | | Total Heat Generation Amount Ratio at Join Portion (-) |
|---|---|---|
| Invention Examples | Invention Example 3 | 1.27 |
| | Invention Example 4 | 1.35 |
| Comparative Examples | Comparative Example 4 | 1.08 |
| | Comparative Example 5 | 1.00 |

The total heat generation amount ratios listed in Table 2 show the proportion of the total heat generation amount in each of the tests when the total heat generation amount in the Comparative Example 5 is taken as 1.

As shown in Table 2, in the Invention Examples 3, 4, in addition to the ferrite core as the outside section 9b, there is also a ferrite core installed as the center section 9c, and it is confirmed that there is an increase of from 27% to 35% in the total heat generation amount compared to the Comparative Example 4 not installed with these ferrite cores.

In each of the Invention Examples 1 to 4, when each of the tests was performed under the same conditions except in that the downstream side end portion 8b1 of the outside section 8b employed as the ferromagnet was branched in a U-shape as illustrated in Fig. 6, although the total heat amount ratio at the apex (join portion) was about 20% lower than the Invention Examples 1 to 4, respectively, it can be seen that sufficiently high heating efficiency was obtained compared to the Comparative Examples 1 to 5.

It is confirmed from the results of the examples described above that there is a large improvement in the heating efficiency by further adding a ferrite core as the center section of the ferromagnet in addition to the ferrite core serving as the outside section of the ferromagnet disposed above the induction coil.

### Explanation of the Reference Numerals

- 1: metal strip, open pipe
- 2: opening of open pipe
- 2a, 2b: end parts of open pipe
- 6: join portion (weld portion)
- 50, 60: electric resistance welded pipe welding apparatus
- 3: induction coil
- 7: roll
- 8: ferromagnet
- 8a: inside section
- 8b: outside section
- 8c: center section
- 9: ferromagnet
- 9a: inside section
- 9b: outside section
- 9c: center section
- 10: impeder
- 11: impeder case
- 4a, 4b, 5a, 5b: induction currents
- M: magnetic flux

## Claims

1. An electric resistance welded pipe welding apparatus (50; 70) for manufacturing an electric resistance welded pipe, in combination with an open pipe (1), the electric resistance welded pipe welding apparatus (50; 70) being configured to weld a join portion (6) of two end parts (2a, 2b) of an open pipe (1) that includes the opening (2) extending in a running direction (R), the two end parts (2a, 2b) facing the opening (2), the electric resistance welded pipe welding apparatus (50; 70) further comprising:
an induction coil (3) formed so as to encircle an outer circumferential face of the open pipe (1) and configured such that the two end parts (2a, 2b) are melted by an induction current generated by a high frequency current passing through the induction coil (3),
the electric resistance welded pipe welding apparatus (50; 70) being configured such that the two end parts (2a, 2b) are placed in contact with each other and welded together at the join portion (6) while gradually closing a gap of the opening (2),
wherein:
the electric resistance welded pipe welding apparatus (50; 70) further comprises a ferromagnet (8; 9) including an inside section (8a; 9a) arranged to extend in the running direction (R) inside the open pipe (1) and inside the induction coil (3), an outside section (8b; 9b) arranged to extend in the running direction (R) outside the open pipe (1) and outside the induction coil (3), and a center section (8c; 9c) extending in a pipe inside-outside direction of the open pipe (1) between the inside section (8a; 9a) and the outside section (8b; 9b) at a position at an upstream side of the induction coil (3); and
in a state in which an open side of a portion of the ferromagnet (8; 9) configured by portions of the inside section (8a; 9a) and the outside section (8b; 9b) further toward the downstream side than the center section (8c; 9c), and by the center section (8c; 9c), is disposed facing the running direction downstream side, a closed circuit of magnetic flux (M) is formed passing through the inside section (8a; 9a), the center section (8c; 9c), and the outside section (8b; 9b).

2. The electric resistance welded pipe welding apparatus (50; 70) of claim 1, wherein the ferromagnet (8; 9) has a cross-section shape, along the running direction (R), of a C-shape or a square-cornered C-shape, a U-shape turned on its side or a square-cornered U-shape turned on its side, an h-shape turned on its side, or an H-shape turned on its side.

3. The electric resistance welded pipe welding apparatus (50; 70) of claim 1 or claim 2, wherein at least one end portion (8al, 8b1), on the downstream side, among the outside section (8b; 9b) and the inside section (8a; 9a) of the ferromagnet (8; 9) is of a branched shape.

4. The electric resistance welded pipe welding apparatus (50; 70) of any one of claim 1 to claim 3, wherein an impeder (10) formed of a ferromagnetic material is disposed inside the open pipe (1), and the inside section (8a; 9a) of the ferromagnet (8; 9) is configured by at least a portion of the impeder (10).

5. A method for manufacturing an electric resistance welded pipe using an electric resistance welded pipe welding apparatus (50; 70), the apparatus comprising an induction coil (3) and a ferromagnet (8; 9), wherein in the method for manufacturing an electric resistance welded pipe,
two end parts (2a, 2b) of an open pipe (1) that includes an opening (2) extending in a running direction (R), the two end parts (2a, 2b) facing the opening (2), are melted by an induction current generated by passing a high frequency current through the induction coil (3), the induction coil (3) being formed so as to encircle an outer circumferential face of the open pipe (1), and the two end parts (2a, 2b) are placed in contact with each other and welded together at a join portion (6) while gradually closing a gap of the opening (2), wherein:
the ferromagnet (8; 9) includes an inside section (8a; 9a) extending in the running direction (R) inside the open pipe (1) and inside the induction coil (3), an outside section (8b; 9b) extending in the running direction (R) outside the open pipe (1) and outside the induction coil (3), and a center section (8c; 9c) extending in a pipe inside-outside direction of the open pipe (1) between the inside section (8a; 9a) and the outside section (8b; 9b) at a position at an upstream side of the induction coil (3), and
an open side of a portion of the ferromagnet (8; 9) configured by portions of the inside section (8a; 9a) and the outside section (8b; 9b) further toward the downstream side than the center section (8c; 9c), and by the center section (8c; 9c), is disposed facing the running direction downstream side, and a closed circuit of magnetic flux is formed passing through the inside section (8a; 9a), the center section (8c; 9c), and the outside section (8b; 9b).

## Patentansprüche

1. Schweißvorrichtung (50; 70) für widerstandsgeschweißte Rohre zur Herstellung eines widerstandsgeschweißten Rohrs in Kombination mit einem offenen Rohr (1), wobei die Schweißvorrichtung (50; 70) für widerstandsgeschweißte Rohre so konfiguriert ist, dass sie einen Verbindungsabschnitt (6) zweier Endteile (2a, 2b) eines offenen Rohrs (1) verschweißt, das die Öffnung (2) aufweist, die sich in Laufrichtung (R) erstreckt, die beiden Endteile (2a, 2b) zur Öffnung (2) weisen und die Schweißvorrichtung (50; 70) für widerstandsgeschweißte Rohre ferner aufweist:
eine Induktionsspule (3), die so ausgebildet ist, dass sie eine Außenumfangsfläche des offenen Rohrs (1) umgibt, und so konfiguriert ist, dass die beiden Endteile (2a, 2b) durch einen Induktionsstrom geschmolzen werden, der durch einen die Induktionsspule (3) durchlaufenden Hochfrequenzstrom erzeugt wird,
wobei die Schweißvorrichtung (50; 70) für widerstandsgeschweißte Rohre so konfiguriert ist, dass die beiden Endteile (2a, 2b) in Kontakt miteinander platziert und am Verbindungsabschnitt (6) miteinander verschweißt werden, während ein Spalt der Öffnung (2) allmählich geschlossen wird,
wobei:
die Schweißvorrichtung (50; 70) für widerstandsgeschweißte Rohre ferner aufweist: einen Ferromagneten (8; 9) mit einem Innenteilstück (8a; 9a), das so angeordnet ist, dass es sich innerhalb des offenen Rohrs (1) und innerhalb der Induktionsspule (3) in Laufrichtung (R) erstreckt, einem Außenteilstück (8b; 9b), das so angeordnet ist, dass es sich außerhalb des offenen Rohrs (1) und außerhalb der Induktionsspule (3) in Laufrichtung (R) erstreckt, und einem Mittelteilstück (8c; 9c), das sich in Richtung vom Rohrinneren zum Rohräußeren des offenen Rohrs (1) zwischen dem Innenteilstück (8a; 9a) und dem Außenteilstück (8b; 9b) an einer Position auf einer stromaufwärtigen Seite der Induktionsspule (3) erstreckt; und
in einem Zustand, in dem eine offene Seite eines Abschnitts des Ferromagneten (8; 9), der durch Abschnitte des Innenteilstücks (8a; 9a) und des Außenteilstücks (8b; 9b) weiter zur stromabwärtigen Seite als das Mittelteilstück (8c; 9c) sowie durch das Mittelteilstück (8c; 9c) konfiguriert ist, zur stromabwärtigen Seite in Laufrichtung weisend angeordnet ist, ein geschlossener Kreis aus magnetischem Fluss (M) gebildet ist, der das Innenteilstück (8a; 9a), das Mittelteilstück (8c; 9c) und das Außenteilstück (8b; 9b) durchläuft.

2. Schweißvorrichtung (50; 70) für widerstandsgeschweißte Rohre nach Anspruch 1, wobei der Ferromagnet (8; 9) eine Querschnittform in Laufrichtung (R) mit einer C-Form oder einer scharfkantigen C-Form, einer auf die Seite gelegten U-Form oder einer auf die Seite gelegten scharfkantigen U-Form, einer auf die Seite gelegten h-Form oder einer auf die Seite gelegten H-Form hat.

3. Schweißvorrichtung (50; 70) für widerstandsgeschweißte Rohre nach Anspruch 1 oder 2, wobei mindestens ein Endabschnitt (8a1, 8b1) auf der stromabwärtigen Seite aus dem Außenteilstück (8b; 9b) und dem Innenteilstück (8a; 9a) des Ferromagneten (8; 9) eine gegabelte Form hat.

4. Schweißvorrichtung (50; 70) für widerstandsgeschweißte Rohre nach einem der Ansprüche 1 bis 3, wobei ein Impeder (10), der aus einem ferromagnetischen Material gebildet ist, innerhalb des offenen Rohrs (1) angeordnet ist und das Innenteilstück (8a; 9a) des Ferromagneten (8; 9) durch mindestens einen Abschnitt des Impeders (10) konfiguriert ist.

5. Verfahren zur Herstellung eines widerstandsgeschweißten Rohrs mit Hilfe einer Schweißvorrichtung (50; 70) für widerstandsgeschweißte Rohre, wobei die Vorrichtung eine Induktionsspule (3) und einen Ferromagneten (8; 9) aufweist, wobei im Verfahren zur Herstellung eines widerstandsgeschweißten Rohrs zwei Endteile (2a, 2b) eines offenen Rohrs (1), das eine sich in Laufrichtung (R) erstreckende Öffnung (2) aufweist, wobei die beiden Endteile (2a, 2b) zur Öffnung (2) weisen, durch einen Induktionsstrom geschmolzen werden, der durch Führen eines Hochfrequenzstroms durch die Induktionsspule (3) erzeugt wird, wobei die Induktionsspule (3) so ausgebildet ist, dass sie eine Außenumfangsfläche des offenen Rohrs (1) umgibt, und die beiden Endteile (2a, 2b) in Kontakt miteinander platziert und an einem Verbindungsabschnitt (6) miteinander verschweißt werden, während ein Spalt der Öffnung (2) allmählich geschlossen wird, wobei:
der Ferromagnet (8; 9) aufweist: ein Innenteilstück (8a; 9a), das sich innerhalb des offenen Rohrs (1) und innerhalb der Induktionsspule (3) in Laufrichtung (R) erstreckt, ein Außenteilstück (8b; 9b), das sich außerhalb des offenen Rohrs (1) und außerhalb der Induktionsspule (3) in Laufrichtung (R) erstreckt, und ein Mittelteilstück (8c; 9c), das sich in Richtung vom Rohrinneren zum Rohräußeren des offenen Rohrs (1) zwischen dem Innenteilstück (8a; 9a) und dem Außenteilstück (8b; 9b) an einer Position auf einer stromaufwärtigen Seite der Induktionsspule (3) erstreckt, und
eine offene Seite eines Abschnitts des Ferromagneten (8; 9), der durch Abschnitte des Innenteilstücks (8a; 9a) und des Außenteilstücks (8b; 9b) weiter zur stromabwärtigen Seite als das Mittelteilstück (8c; 9c) sowie durch das Mittelteilstück (8c; 9c) konfiguriert ist, zur stromabwärtigen Seite in Laufrichtung weisend angeordnet ist und ein geschlossener Kreis aus magnetischem Fluss gebildet ist, der das Innenteilstück (8a; 9a), das Mittelteilstück (8c; 9c) und das Außenteilstück (8b; 9b) durchläuft.

## Revendications

1. Appareil de soudage de tube soudé par résistance électrique (50 ; 70) pour fabriquer un tube soudé par résistance électrique, en combinaison avec un tube ouvert (1), l'appareil de soudage de tube soudé par résistance électrique (50 ; 70) étant configuré pour souder une portion de jonction (6) de deux parties terminales (2a, 2b) d'un tube ouvert (1) qui inclut l'ouverture (2) s'étendant dans une direction de déplacement (R), les deux parties terminales (2a, 2b) faisant face à l'ouverture (2), l'appareil de soudage de tube soudé par résistance électrique (50 ; 70) comprenant en outre :
une bobine d'induction (3) formée de manière à encercler une face circonférentielle externe du tube ouvert (1) et configurée de telle sorte que les deux parties terminales (2a, 2b) sont fondues par un courant d'induction produit par un courant haute fréquence passant dans la bobine d'induction (3),
l'appareil de soudage de tube soudé par résistance électrique (50 ; 70) étant configuré de telle sorte que les deux parties terminales (2a, 2b) sont placées en contact l'une avec l'autre et soudées ensemble au niveau de la portion de jonction (6) tout en fermant progressivement un interstice de l'ouverture (2),
où :
l'appareil de soudage de tube soudé par résistance électrique (50 ; 70) comprend en outre un aimant ferromagnétique (8 ; 9) incluant une section intérieure (8a ; 9a) agencée pour s'étendre dans la direction de déplacement (R) à l'intérieur du tube ouvert (1) et à l'intérieur de la bobine d'induction (3), une section extérieure (8b ; 9b) agencée pour s'étendre dans la direction de déplacement (R) à l'extérieur du tube ouvert (1) et à l'extérieur de la bobine d'induction (3), et une section centrale (8c ; 9c) s'étendant dans une direction intérieur-extérieur de tube du tube ouvert (1) entre la section intérieure (8a ; 9a) et la section extérieure (8b ; 9b) à une position au niveau d'un côté amont de la bobine d'induction (3) ; et
dans un état dans lequel un côté ouvert d'une portion de l'aimant ferromagnétique (8 ; 9) configurée par des portions de la section intérieure (8a ; 9a) et de la section extérieure (8b ; 9b) plus en direction du côté aval que la section centrale (8c ; 9c), et par la section centrale (8c ; 9c), est disposé en faisant face au côté aval de la direction de déplacement, un circuit fermé de flux magnétique (M) est formé passant par la section intérieure (8a ; 9a), la section centrale (8c ; 9c) et la section extérieure (8b ; 9b).

2. Appareil de soudage de tube soudé par résistance électrique (50 ; 70) selon la revendication 1, où l'aimant ferromagnétique (8 ; 9) a une forme en section transversale, le long de la direction de déplacement (R), d'une forme de C ou d'une forme de C à angles carrés, d'une forme de U tournée sur son côté ou d'une forme de U à angles carrés tournée sur son côté, et d'une forme de h tournée sur son côté, ou d'une forme de H tournée sur son côté.

3. Appareil de soudage de tube soudé par résistance électrique (50 ; 70) selon la revendication 1 ou 2, où au moins une portion terminale (8a1, 8b1), sur le côté aval, parmi la section extérieure (8b ; 9b) et la section intérieure (8a ; 9a) de l'aimant ferromagnétique (8 ; 9) est d'une forme ramifiée.

4. Appareil de soudage de tube soudé par résistance électrique (50 ; 70) selon l'une quelconque de la revendication 1 à la revendication 3, où un élément d'impédance (10) formé d'un matériau ferromagnétique est disposé à l'intérieur du tube ouvert (1), et la section intérieure (8a ; 9a) de l'aimant ferromagnétique (8 ; 9) est configurée par au moins une portion de l'élément d'impédance (10).

5. Procédé pour fabriquer un tube soudé par résistance électrique au moyen d'un appareil de soudage de tube soudé par résistance électrique (50 ; 70), l'appareil comprenant une bobine d'induction (3) et un aimant ferromagnétique (8 ; 9), où dans le procédé pour fabriquer un tube soudé par résistance électrique,
deux parties terminales (2a, 2b) d'un tube ouvert (1) qui inclut une ouverture (2) s'étendant dans une direction de déplacement (R), les deux parties terminales (2a, 2b) faisant face à l'ouverture (2), sont fondues par un courant d'induction produit par le passage d'un courant haute fréquence dans la bobine d'induction (3), la bobine d'induction (3) étant formée de manière à encercler une face circonférentielle externe du tube ouvert (1), et les deux parties terminales (2a, 2b) sont placées en contact l'une avec l'autre et soudées ensemble au niveau d'une portion de jonction (6) tout en fermant progressivement un interstice de l'ouverture (2),
où :
l'aimant ferromagnétique (8 ; 9) inclut une section intérieure (8a ; 9a) s'étendant dans la direction de déplacement (R) à l'intérieur du tube ouvert (1) et à l'intérieur de la bobine d'induction (3), une section extérieure (8b ; 9b) s'étendant dans la direction de déplacement (R) à l'extérieur du tube ouvert (1) et à l'extérieur de la bobine d'induction (3), et une section centrale (8c ; 9c) s'étendant dans une direction intérieur-extérieur de tube du tube ouvert (1) entre la section intérieure (8a ; 9a) et la section extérieure (8b ; 9b) à une position au niveau d'un côté amont de la bobine d'induction (3), et
un côté ouvert d'une portion de l'aimant ferromagnétique (8 ; 9) configurée par des portions de la section intérieure (8a ; 9a) et de la section extérieure (8b ; 9b) plus en direction du côté aval que la section centrale (8c ; 9c), et par la section centrale (8c ; 9c), est disposé en faisant face au côté aval de la direction de déplacement, et un circuit fermé de flux magnétique est formé passant par la section intérieure (8a ; 9a), la section centrale (8c ; 9c) et la section extérieure (8b ; 9b).
